# EUROPÄISCHE PATENTSCHRIFT

(11) **EP 1 388 580 B1**
(45) Veröffentlichungstag und Bekanntmachung des Hinweises auf die Patenterteilung: **17.10.2007**
(21) Anmeldenummer: 03015866.1
(22) Anmeldetag: 11.07.2003
(51) Int. Cl.: C09D 175/04

(54) **Mit Wachs modifizierte Beschichtungsmittel mit verbesserten Abriebbeständigkeiten**
Wax modified non-abrasive coating
Revêtement modifié avec une cire résistant à l'usure

(30) Priorität: 06.08.2002 DE 10235933; 07.01.2003 DE 10300118
(43) Veröffentlichungstag der Anmeldung: 11.02.2004
(73) Patentinhaber: Degussa GmbH, 40474 Düsseldorf (DE)
(72) Erfinder: Höhne, Jörg, 63456 Hanau (DE); Waterkamp, Paul-Ludwig, 45657 Recklinghausen (DE); Christoph, Wolfgang, 45768 Marl (DE)

(56) Entgegenhaltungen:
- EP-A- 0 047 508
- EP-A- 0 969 053
- US-A- 6 084 034

## Beschreibung

Härtbare Beschichtungsmittel, auf der Basis eines hydroxylfunktionellen Bindemittels und eines Polyisocyanates oder eines Polyester-Melaminharz-Systems, die ein suspendiertes, feinteiliges Polyamid enthalten, sind bekannt (EP B 0 047 508). Diese Beschichtungsmittel ergeben nach der Härtung eine wetterbeständige und lichtbeständige Beschichtung mit guter mechanischer Verformbarkeit, guter Abriebfestigkeit und guter Chemikalienfestigkeit.

Zur Zeit werden Polyamid-Feinpulver hauptsächlich auf Basis Polyamid 11 und Polyamid 12 in Lacken auf Polyurethan- und Polyesterbasis als Strukturmittel und Eigenschaftsverbesserer eingesetzt. Auch andere Bindemittelsysteme sind denkbar.

Anwendung finden diese Systeme hauptsächlich in der Coil-Coating Industrie, aber auch im Bereich der Holzlacke und immer mehr in allgemeinen industriellen Bereichen. Beispiele sind dabei Fußbodenbeläge oder abriebfeste Holzlacke für Küchenmöbel (Arbeitsplatten).

In den derzeitigen Anwendungen nutzt man die sehr gute Abriebbeständigkeit der Polyamid-Pulver insbesondere als Strukturmittel, um die Langlebigkeit der Lacksysteme, z.B. im Bereich von Sonnenschutzsystemen (Rollladenstäbe) zu erhöhen. Im Coil-Coating Verfahren werden die Lacksysteme auf Aluminium- und auf Stahlbleche aufgetragen, die anschließend zu den gewünschten Bauteilen geschnitten und geformt werden.

Bei den bisher entwickelten Beschichtungsmitteln handelt es sich z.B. um Reaktivsysteme, die in Einbrennöfen zu einer Reaktion geführt werden und aushärten, wie zum Beispiel die Deblockierung von Isocyanaten bei Temperaturen über 160 °C und anschließende Reaktion mit Hydroxylendgruppen eines Polyesters.

Grundlage für die Verbesserung des Polyurethan- und/oder Polyester-Lacksystemes mit Polyamid 11-Pulvern und/oder Polyamid 12-Pulvern als Strukturmittel ist die Reaktion der nachweislich im Polyamid enthaltenen freien, reaktiven Endgruppen, hauptsächlich Carboxylund Aminoendgruppen mit den im Ofen erzeugten reaktiven Komponenten. Hierbei erfolgt eine chemische Einbindung des Polyamids in den sich im Ofen bildenden Lackfilm.

Als weitere Komponente, um die Oberflächenbeschaffenheit und die Abriebbeständigkeit in Lackfilmen zu beeinflussen, eignen sich Wachse, insbesondere mikronisierte PE-Wachse. Aus lacktechnischer Sicht wirken sich hohe Konzentrationen von Wachsen aber auch negativ in der Lackschicht aus. Die Lacke zeigen häufig eine hohe Fingerabdruckempfindlichkeit. Es können Ausschwitzerscheinungen an der Oberfläche auftreten, welche die Brillanz des Lackes reduzieren oder sogar zu einer milchigen Eintrübung des Lackes führen können. Auch wurde beobachtet, dass sich hohe Anteile an PE-Wachs nur noch unvollständig im Lack dispergieren lassen. Durch die inhomogene Verteilung zeigte die fertige Lackschicht eine fleckige Struktur.

Es bestand daher die Aufgabe, ein Beschichtungsmittel bereit zu stellen, welches die aufgeführten Nachteile auch bei hohen Wachsanteilen nicht aufweist. Die Aufgabe wurde gemäß den Patentansprüchen gelöst.

Überraschenderweise stellte sich heraus, dass man mit den oben beschriebenen Beschichtungsmitteln, welche Polyamidpulver enthalten, eine erhebliche Verbesserung der Abriebbeständigkeit des Lackfilmes erreicht, insbesondere dann, wenn erfindungsgemäß das Polyamidpulver zuvor mit einem Wachs gecoatet wurde.

Hierbei wurde überraschend beobachtet, dass die Abriebbeständigkeit der Lackfilme am größten ist, wenn ein mit Wachsen gecoatetes Polyamid-Pulver eingesetzt wird und größer ist, als wenn Wachs und Polyamidpulver auf herkömmliche Weise getrennt dem Beschichtungsmittel zugesetzt werden.

Zudem lassen sich mit dem erfindungsgemäßen Lacksystemen die oben genannten Nachteile bei hohen Wachskonzentrationen wie Fingerabdruckempfindlichkeit, Ausschwitzen an der Oberfläche und/oder milchige Trübung vermeiden, bzw. deutlich reduzieren.

Die Annahme, dass eine chemische Anbindung des Polyamid-Pulvers im Lackfilm durch ein Coating mit Wachs erheblich behindert wird und eine Ausreibung der Polyamid-Teilchen aus dem Lackfilm ermöglicht, traf nicht zu. Vielmehr wurde überraschend festgestellt, dass sich trotz des Coatings eine vergleichbar gute chemische Anbindung der Polyamid-Endgruppen an die geblockten Reaktivsysteme im Einbrennofen ergibt.

Als Wachse im erfindungsgemäßen Beschichtungsmittel eignen sich alle olefinischen und/oder Fischer-Tropsch Wachse. Diese können auch modifiziert eingesetzt werden. Beispiel für ein modifiziertes Wachs ist ein PTFE-haltiges PE-Wachs. Vorteilhaft haben diese Wachse Schmelzpunkte von 90 °C bis 160 °C.

Die folgenden Ausführungen sollen das erfindungsgemäße Produkt und seine Herstellung näher erläutern.

Die erfindungsgemäßen Beschichtungsmittel enthalten gecoatete Polyamid-Pulver. Diese bestehen aus Polyamid-Pulver, welche vorzugsweise Polyamid 11 und/oder Polyamid 12 enthalten. Als Polyamid-Pulver können sowohl Mahlpulver, welche durch Vermahlen von Polyamid-Granulat hergestellt werden, als auch Fällpulver eingesetzt werden. Besonders bevorzugt werden Polyamid 12-Pulver verwendet, die nach dem Fällverfahren gemäß DE 29 06 647 B1 (Hüls AG) hergestellt werden, da diese Pulver eine sehr homogene Kornform und eine poröse Oberfläche aufweisen.

Die mittlere Kornform d₅₀ liegt bei den im Lackbereich eingesetzten Polyamid-Pulver bevorzugt zwischen 5 und 60 µm, jedoch finden für bestimmte Anwendungen auch größere Partikel bis d₅₀ von etwa 150 µm Verwendung.

Die Polyamid-Pulver werden mit einem Wachs gecoatet. Dabei werden in der Regel zwischen 0,5 Teile und 10 Teile eines mikronisierten Wachses bezogen auf 100 Teile Polyamid-Pulver aufgezogen.

Das Wachs kann sowohl kalt gemischt im Dry-Blend, als auch durch Bondem oder jedes andere bekannte Heißmischverfahren auf das Polyamid aufgezogen werden, wobei zu beachten ist, dass die maximale Temperatur im Mischer unterhalb der Schmelztemperatur des Polyamid-Pulvers bleibt, damit das Polyamidpulver selbst nicht zu größeren Partikeln zusammenklebt oder sintert und es im Mischer zu keiner Belegung mit aufgeschmolzenen Polyamid kommt.

Das gecoatete Polyamid-Pulver wird im erfindungsgemäßen Beschichtungsmittel in Anteilen zwischen 0,1 und 40 Gew.-% eingesetzt, wobei der Anteil bevorzugt zwischen 0,5 und 5 Gew.-% liegt, besonders bevorzugt zwischen 1 und 3 Gew.-% liegt.

Des weiteren enthalten solche Beschichtungsmittel Komponenten, wie sie in EP 0 047 508 A2 beschrieben sind. Die Lacksysteme beruhen auf einem hydroxylfunktionellen Bindemittel, welches mit Isocyanatgruppen eines Polyisocyanates reagiert. Beispiele dafür sind Polyester, Polyole, Polyether, Polyurethane, Polyglycole, Polyacrylate, Melaminharze, Vinylharze, Epoxyharze, Phenolharze, Harnstoffharze oder vergleichbare Polymere mit Hydroxylgruppen, sowie andere funktionelle Gruppen mit aktiven Wasserstoffatomen, wie zum Beispiel Amine, Polyaminoamide, etc.

Die erfindungsgemäßen Beschichtungsmittel enthalten beispielsweise an geblocktem Polyisocyanat und hydroxylgruppenhaltigem Bindemittel in Summe 10 bis 60 Gew.-%, vorzugsweise 20 bis 40 Gew.-%, wobei, wie in EP 0 047 508 beschrieben das Verhältnis zwischen diesen beiden Komponenten zwischen 0,5 : 1 und 5: 1 variieren kann.

Ferner können die Beschichtungsmittel diverse Lösemittel enthalten, sowie Farbstoffe, Pigmente und weitere handelsübliche Additive wie zum Beispiel UV-Stabilisatoren. Entsprechende Verbindungen sind ebenfalls in EP 0 047 508 beschrieben.

Die erfindungsgemäßen Beschichtungsmittel können mit allen gängigen Methoden auf die jeweilige Oberfläche aufgetragen werden, als nicht limitierende Beispiele seien Sprühlackierverfahren, Walzlackierverfahren, Bandlackierverfahren (Coil-Coating), Gieß- und Rakelverfahren genannt.

Die mit dem Beschichtungsmittel versehene Oberfläche wird anschließend auf eine Temperatur erwärmt, bei der die Reaktivsysteme mit den funktionellen Gruppen des Bindemittels und des Polyamid-Pulvers reagieren können. Hierbei verläuft das Beschichtungsmittel zu einem Lackfilm und härtet aus. Die Erwärmung kann dabei sowohl in einem Ofen (Umluftofen) als auch durch Bestrahlung mit einer Wärmequelle oder durch Induktion erfolgen.

Die folgenden Beispiele sollen die Erfindung näher erläutern, ohne dass sie auf diese eingeschränkt wird:

### Herstellung der gecoateten Beispielpolyamide

100 Teile eines Polyamid 12 Fällpulvers, welches gemäß DE 29 06 647 B1 hergestellt wurde, mit einer mittleren Kornverteilung d₁₀ = 7 µm, d₅₀ = 21 µm und d₉₀ = 38 µm werden mit verschiedenen Wachsen gemäß Tabelle 1 jeweils 3 Minuten auf einem 10 L Henschel Schnellmischer bei 600 U/min intensiv gemischt. Die Leistungsaufnahme des Mischer liegt jeweils bei ca. 3,4 * 10⁴ W.

**Tabelle 1: Polyamid-Pulver für Klarlacke**

| **Produkt** | **Wachstyp** | **Wachsanteil** |
|---|---|---|
| Polyamid A | VESTOWAX 1012 | 5 Teile |
| Polyamid B | Lanco-Wax TF1778 | 5 Teile |
| Polyamid C | Comomulus VP 45 | 5 Teile |
| Polyamid D | Lanco PE1500 SF | 5 Teile |
| Polyamid E | - | 0 Teile |

Des weiteren wurde das Polyamid 12 Fällpulver als Vergleichsbeispiel ohne Wachs eingesetzt, als Polyamid E gekennzeichnet. Mit den Polyamid-Pulvern wurde ein Klarlack gemäß Tabelle 2 hergestellt:

**Tabelle 2: Zusammensetzung Klarlack**

| | |
|---|---|
| Polyesterharz ölfrei | 45 % |
| Polyisocyanat blockiert | 15 % |
| Polyacrylat | 1 % |
| DBTL (Katalysator) | 0,2 % |
| Polyamid 12-Pulver (Polyamid A-E) | 0 - 10 % |
| Lösemittelgemisch (aromatische Kohlenwasserstoffe) | ad 100 % |

Einige Lacke enthalten zusätzlich 1 % mikronisiertes Wachs (siehe Tabelle 3).

Mit den Lacken wurden Probebeschichtungen mit 20 µm Trockenschichtdicke auf Aluminiumblech erzeugt. Die Abriebfestigkeit wurde nach DIN ISO 53754 mit einem Taberabraser 2 x 50 g CS 10 Rollen 3000 Umdrehungen bestimmt. Die Abriebwerte sind in Tabelle 3a und 3b zusammengestellt.

**Tabelle 3a:**

| **Beispiel** | **Polyamid-Pulver** | **Mikronisiertes Wachs** | **Abrieb [mg]** |
|---|---|---|---|
| 1. (Nullprobe) | - | - | 90 |
| 2. (Vergleich) | 10 % Polyamid E | - | 72 |
| 3. | 10 % Polyamid A | - | 58 |
| 4. | 10 % Polyamid B | - | 62 |
| 5. | 10 % Polyamid C | - | 62 |
| 6. | 10 % Polyamid D | - | 57 |

**Tabelle 3b:**

| **Beispiel** | **Polyamid-Pulver** | **Mikronisiertes Wachs** | **Abrieb [mg]** |
|---|---|---|---|
| 7. (Nullprobe) | - | 1,5 % VESTOWAX 1012 | 52 |
| 8. (Vergleich) | 10 % Polyamid E | 1,5 % VESTOWAX 1012 | 53 |
| 9. | 10 % Polyamid A | 1 % VESTOWAX 1012 | 30 |

## Patentansprüche

1. Härtbares Beschichtungsmittel auf Basis eines hydroxylfunktionellen Bindemittels und eines Polyisocyanates, welches ein suspendiertes, feinteiliges Polyamid enthält,
**dadurch gekennzeichnet,**
**dass** das Polyamid-Pulver mit Wachs gecoatet ist.

2. Härtbares Beschichtungsmittel nach Anspruch 1,
**dadurch gekennzeichnet,**
**dass** als Wachse olefinische und/oder Fischer-Tropsch Wachse eingesetzt werden.

3. Härtbares Beschichtungsmittel nach einem der vorhergehenden Ansprüche,
**dadurch gekennzeichnet,**
**dass** Wachse mit einem Schmelzbereich von 90 bis 160 °C eingesetzt werden.

4. Härtbares Beschichtungsmittel nach einem der vorhergehenden Ansprüche,
**dadurch gekennzeichnet,**
**dass** das Polyamid-Pulver Polyamid 11 und/oder Polyamid 12 enthält.

5. Härtbares Beschichtungsmittel nach einem der vorhergehenden Ansprüche,
**dadurch gekennzeichnet,**
**dass** das Polyamid-Pulver ein Polyamid 12 Fällpulver enthält.

6. Verwendung eines härtbaren Beschichtungsmittels nach einem der vorhergehenden Ansprüche zum Beschichten von Aluminium- und Eisen-Coils.

7. Verwendung eines härtbaren Beschichtungsmittels nach einem der vorhergehenden Ansprüche zum Beschichten von Holzoberflächen.

8. Verwendung eines härtbaren Beschichtungsmittels nach einem der vorhergehenden Ansprüche zum Beschichten von Fußbodenoberflächen.

9. Verfahren zur Herstellung eines härtbaren Beschichtungsmittels auf der Basis eines hydroxylfunktionellen Bindemittels und eines geblockten Polyisocyanates, welches ein suspendiertes, feinteiliges Polyamid enthält,
**dadurch gekennzeichnet,**
**dass** das Polyamid-Pulver vor der Zugabe zum Beschichtungsmittel mit Wachs gecoatet wird.

## Claims

1. Curable coating composition based on a hydroxyl-functional binder and a polyisocyanate, comprising a suspended finely divided polyamide, **characterized in that** the polyamide powder is coated with wax.

2. Curable coating composition according to Claim 1, **characterized in that** olefinic and/or Fischer-Tropsch waxes are used as waxes.

3. Curable coating composition according to either of the preceding claims, **characterized in that** waxes having a melting range of from 90 to 160°C are used.

4. Curable coating composition according to any of the preceding claims, **characterized in that** the polyamide powder comprises polyamide 11 and/or polyamide 12.

5. Curable coating composition according to any of the preceding claims, **characterized in that** the polyamide powder comprises a polyamide 12 precipitated powder.

6. Use of a curable coating composition according to any of the preceding claims for coating aluminum coils and iron coils.

7. Use of a curable coating composition according to any of the preceding claims for coating wood surfaces.

8. Use of a curable coating composition according to any of the preceding claims for coating floor surfaces.

9. Process for preparing a curable coating composition based on a hydroxyl-functional binder and a blocked polyisocyanate, comprising a suspended finely divided polyamide, **characterized in that** the polyamide powder is coated with wax before it is added to the coating composition.

## Revendications

1. Agent d'enduction durcissable à base d'un liant à fonction hydroxyle et d'un polyisocyanate, qui contient un polyamide finement divisé en suspension,
**caractérisé en ce que**
la poudre de polyamide est enrobée de cire.

2. Agent d'enduction durcissable selon la revendication 1,
**caractérisé en ce que**
l'on utilise comme cires des cires oléfiniques et/ou des cires de Fischer-Tropsch.

3. Agent d'enduction durcissable selon l'une quelconque des revendications précédentes,
**caractérisé en ce que**
l'on utilise des cires ayant une plage de fusion de 90 à 160 °C.

4. Agent d'enduction durcissable selon l'une quelconque des revendications précédentes,
**caractérisé en ce que**
la poudre de polyamide contient du polyamide 11 et/ou du polyamide 12.

5. Agent d'enduction durcissable selon l'une quelconque des revendications précédentes,
**caractérisé en ce que**
la poudre de polyamide contient une poudre précipitante de polyamide 12.

6. Utilisation d'un agent d'enduction durcissable selon l'une quelconque des revendications précédentes pour l'enduction de bobines d'aluminium et de fer.

7. Utilisation d'un agent d'enduction durcissable selon l'une quelconque des revendications précédentes pour l'enduction de surfaces de bois.

8. Utilisation d'un agent d'enduction durcissable selon l'une quelconque des revendications précédentes pour l'enduction de surfaces de plancher.

9. Procédé de fabrication d'un agent d'enduction durcissable à base d'un liant à fonction hydroxyle et d'un polyisocyanate séquencé, qui contient un polyamide finement divisé en suspension,
**caractérisé en ce que**
la poudre de polyamide est enrobée de cire avant l'addition à l'agent d'enduction.
